Europäisches Patentamt

European Patent Office

Office européen des brevets

(19)

(11) Veröffentlichungsnummer: **0 689 273 A1**

## (12) EUROPÄISCHE PATENTANMELDUNG

(21) Anmeldenummer: **94109682.8**

(22) Anmeldetag: **23.06.94**

(51) Int. Cl.$^6$: **H02J 7/10**

Geänderte Patentansprüche gemäss Regel 86 (2) EPÜ.

(43) Veröffentlichungstag der Anmeldung:
**27.12.95 Patentblatt 95/52**

(84) Benannte Vertragsstaaten:
**DK FR GB IT SE**

(71) Anmelder: **DIAL ENGINEERING AG**
**Altmannsteinstrasse 34**
**CH-8181 Höri (CH)**

(72) Erfinder: **Kammer, Peter**
**Dorfstrasse 39**
**CH-8184 Bachenbülach (CH)**
Erfinder: **Miltenberger, Gerhard**
**Friedrich Ebertstrasse 14**
**D-6477 Limeshain (DE)**

(74) Vertreter: **Lusuardi, Werther Giovanni, Dr.**
**Dr. Lusuardi AG,**
**Kreuzbühlstrasse 8**
**CH-8008 Zürich (CH)**

(54) **Verfahren zum Laden von verschlossenen Bleibatterien**

(57) Das Verfahren eignet sich zum Laden von verschlossenen Bleibatterien. Für die Ladung der Bleibatterien wird eine durch einen Gleichrichter erzeugte, temporär weitgehend konstante Gleichspannung verwendet. Die Ladung erfolgt vorzugsweise mit einer dreistufigen $IU_1 U_2$-Ladekennlinie.

Das erfindungsgemässe Verfahren erlaubt es die Temperatur bei Voll-Ladung etwa 20% niedriger zu halten als bei Verfahren gemäss dem Stand der Technik. Gleichzeitig ist der zur Voll-Ladung benötigte Ladefaktor 1,03 bis 1,04 besser, die Ladezeit bis zu 25 % kürzer und die Gasverluste um den Faktor 2 niedriger.

Fig. 1

Die Erfindung bezieht sich auf ein Verfahren zum Laden von verschlossenen Bleibatterien, gemäss dem Oberbegriff des Patentanspruchs 1.

Die Ladung von Bleibatterien erfolgt in der Regel mit aus dem öffentlichen Stromnetz durch einen Gleichrichter erzeugten Gleichspannungen entsprechenden Potentials. Durch eine dem Batterietyp angepasste Ladecharakteristik (Ladekennlinie) wird versucht, in möglichst geringer Zeit die Batterie auf den Volladezustand zu bringen, ohne dass hierbei lebensdauerverkürzende Nebeneffekte, z.B. Nebenreaktionen, Wasserverluste, Erwärmung, Morphologieveränderungen der aktiven Massen u.a. entstehen.

Bei dem Ladevorgang, welcher - bedingt durch eine chemische Reaktion und durch die ohmschen Leistungsverluste - exotherm verläuft, resultiert eine Erwärmung der Batterie, die den Ladewirkungsgrad verschlechtert, die Gasung erhöht und die Batterielebensdauer reduziert.

Es ist somit eine wichtiges Ziel, die Erwärmung der Batterie während des Ladevorgangs nicht noch zusätzlich zu erhöhen, was z.B. durch hohe Anfangsladestromstärken, zu hohe Ladespannungen und insbesondere einer zu hohen Wechselstromüberlagerung gefördert wird. Die Erwärmung durch Wechselstrom ist proportional der aufgenommenen Wechselstromleistung gemäss der Formel

$$Q = R_{i(ac)} * Zeit * I^2_{eff}$$

Eine zu hohe Wechselstromüberlagerung kann zusätzlich zu Eigenschaftsänderungen der aktiven Massen führen, z.B. Verhärtung, Inaktivierung, Deckschichtenbildung, welche die Leistungsfähigkeit der Batterie verringern. Bei Wechselstromüberlagerung geringer Frequenz (16 2/3 Hz Bahnstrom) wurden teilweise starke Lebensdauerverringerungen an Batterien beobachtet, wenn diese im Zyklenbetrieb in Phasen relativ niedrigen Ladezustandes kommen. Hier wurden starke Korrosionserscheinungen an den Gittern gefunden, wenn gleichzeitig Wechselstromüberlagerungen vorlagen.

Für die Ladung verschlossener Bleibatterien unter Berücksichtigung kurzer Ladezeiten ist üblicherwiese eine IU-Kennlinie gebräuchlich, bei welcher in der ersten I-Phase mit einem relativ hohen Strom bei steigender Spannung geladen wird, die dann in der zweiten U-Phase in eine Konstantspannungsphase übergeht. Die Höhe des Ladestromes in der I-Phase ist etwas von den Batteriebaureihen abhängig und hängt vor allem von der Leistungsfähigkeit des eingesetzten Ladegerätes ab (Ladegerätkosten), und liegt im Bereich von 0,5 bis 1,5 mal dem fünfstündigen Entladetrom $I_5$ der zu ladenden Batterie.

Die Konstantspannung liegt, auch von der Batterietype abhängig, im Bereich von 2,25 bis 2,45 V pro Zelle und stellt einen Kompromiss zwischen zu hoher Wasserzersetzung und zu langer notwendiger Ladezeit dar. Diese Grundkennlinie wird nun von verschiedenen Herstellern modifiziert, indem z.B. eine zweite I-Phase an die U-Phase angehängt wird (beispielsweise wie in der DE-C1 38.13.823 offenbart) oder indem eine zweite U-Phase realisiert wird (IU₀U-Ladekennlinie). Oftmals sind auch die Konstantspannungen temperaturkompensiert oder es werden besondere Zeitverhältnisse realisiert, die z.B. eine Nachladephase von der IU-Zeit abhängig machen und ähnliches. Üblicherweise wird nicht besonders auf die Welligkeit des Ladestromes eingegangen, sondern es wird unterstellt, dass die zulässigen Wechselstromüberlagerungen entsprechend den DIN- und VDE-Richtlinien den Batterien nicht schaden.

So wird die Erwärmung durch überlagerten Wechselstrom insbesondere bei Batterien für Traktionsanwendungen hingenommen, obwohl der starke Einfluss der Batterietemperatur auf die Batterielebensdauer bekannt ist.

Der Einfluss der Temperatur auf die Reaktionsgeschwindigkeiten ist im Bereich der Zimmertemperaturen beträchtlich. Eine Erhöhung der Temperatur um 10°C steigert die Reaktionsgeschwindigkeit auf das 2 bis 4-fache. Diese von van't Hoff erstmals erkannte Gesetzmässigkeit trifft auch auf Korrosionsreaktionen und auch auf die Wasserzersetzungsreaktion zu (mit zunehmender Temperatur wird die Wasserzersetzungsreaktion bevorzugt), was sich im Ergebnis durch einen Rückgang der Batterielebensdauer zeigt.

Eine Erwärmung der Batterie über ihre optimale Gebrauchstemperatur ist somit immer schädlich, so dass auch in der Praxis oftmals zum Beispiel eine Kühlung von Bleibatterien realisiert wird.

Hier will die Erfindung Abhilfe schaffen. Der Erfindung liegt die Aufgabe zugrunde, ein Verfahren zu schaffen, mit welchem eine schonende und dennoch effektive Ladung der Batterie erfolgt und welches durch geeignete Auslegung des Ladegerätes mit nur sehr geringen Wechselspannungsüberlagerungen in Kombination mit einer für verschlossene Batterien angepassten $IU_1U_2$-Ladekennlinie arbeitet.

Die Erfindung löst die gestellte Aufgabe mit einem Verfahren, welches die Merkmale des Anspruchs 1 aufweist.

Weitere vorteilhafte Ausgestaltungen der Erfindung sind in den abhängigen Ansprüchen gekennzeichnet.

Die durch die Erfindung erreichten Vorteile sind im wesentlichen darin zu sehen, dass dank dem erfindungsgemässen Verfahren

- die Temperatur bei Voll-Ladung etwa 20% niedriger als bei Verfahren gemäss dem Stand der Technik liegt;

- der zur Voll-Ladung benötigte Ladefaktor bei 1,03 bis 1,04 besser liegt als beim Stand der Technik;
- die Ladezeit bis zu 25 % kürzer liegt;
- die Gasverluste um den Faktor 2 niedriger liegen.

Die Erfindung und Weiterbildungen der Erfindung werden im folgenden anhand eines Ausführungsbeispiels noch näher erläutert.

Es zeigt:

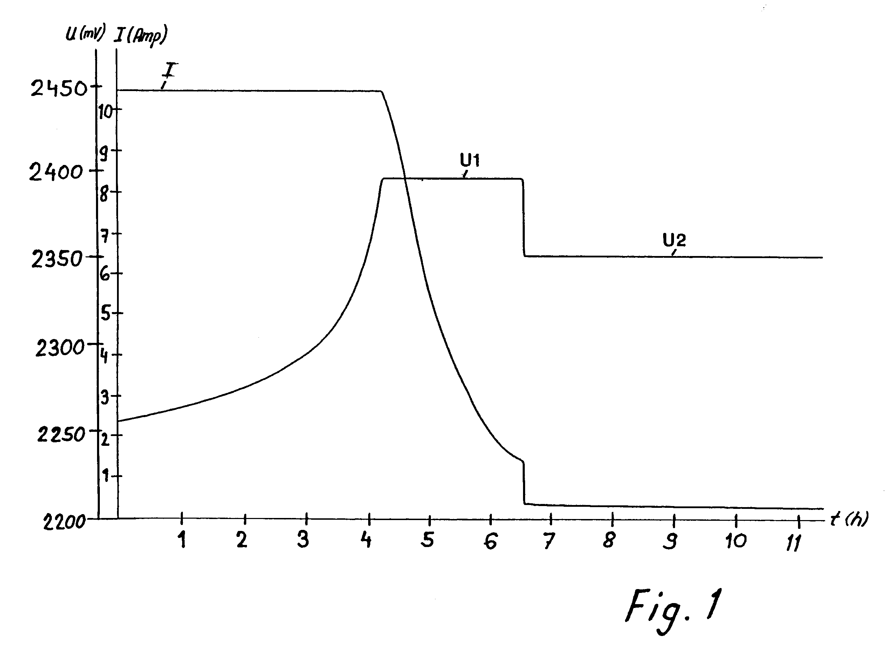

Fig. 1 eine typische erfindungsgemässe $IU_1U_2$-Ladekennlinie.

Bei einer bevorzugten Ausführungsform der Erfindung, welche nachstehend beispielhaft näher beschrieben wird, erfolgt die Ladung dreistufig.

Beispiel:

1. Die erste Ladestufe wird als I-Konstant-Phase durchgeführt bei welcher ein im wesentlichen konstanter Strom, der beispielsweise dem 0,7-fachen des 5-stündigen Entladestromes $I_5$ der zu ladenden Batterie entspricht, bis zu einer Ladespannung im Bereich von 2,3 bis 2,5 V pro Zelle geladen wird. Diese Konstantstromphase ermöglicht eine Ladung der Batterie, unabhängig vom vorhergehenden batteriezulässigen Ladezustand bis zu einem Ladezustand von ca. 70 bis 90%.

2. Wird die vorgegebene Entspannung in der I-Phase erreicht, wird automatisch auf eine Konstantspannungsphase mit 2,25 bis 2,45 V pro Zelle zurückgeschaltet. Jetzt fällt der Ladestrom mit zunehmendem Ladegrad der Batterie asymptotisch ab, da sich der Ladeinnenwiderstand der Batterie immer mehr erhöht. In dieser Ladephase wird ein Ladezustand von praktisch 100% erreicht.

3. Erreicht die Ladestromstärke einen vorgegebenen Minimalwert, so wird die Konstantspannung auf einen geringeren Wert reduziert und so die zweite Konstantspannungsphase begonnen. Hier wird mit einer Spannung von 2,23 bis 2,3 V pro Zelle kontinuierlich weitergeladen, bis das Ladegerät von der Batterie getrennt wird oder durch Netzausfall die Ladespannung fehlt.

Alle drei Ladephasen werden bevorzugt mit einem Ladestrom durchgeführt, dessen Wechselstromüberlagerung weit unter den heute gebräuchlichen Werten liegt. Nach dem Stand der Technik sind gemäss DIN 41 773 Wechselstromüberlagerungen bis zu 1,5 mal dem 5-stündigen Batteriestrom $I_5$ zulässig, wobei in der Praxis oft Wechselströme von bis zum zweifachen von $I_5$ erreicht werden.

Für das erfindungsgemässe Verfahren werden vorzugsweise Ladegeräte eingesetzt, welche nur überlagerte Wechselströme von kleiner als 0,05 mal dem 5-stündigen Entladestrom $I_5$ der zu ladenden Batterie erzeugt und dies zweckmässigerweise mit einer Frequenz von einigen 10 kHz.

Durch den Einsatz eines Sekundär-Schaltreglers wird die gleichgerichtete Spannung mit einer Schaltfrequenz von ca. 30 kHz verlustarm getaktet und durch eine L/C-Kombination im Ausgang gesiebt. Die Regelung erfolgt durch Pulsbreiten-Modulation. Veränderungen im Netzspannungs- und Ausgangsstrombereich werden durch Variationen der Impulsbreiten ausgeregelt. In Verbindung mit den heute zur Verfügung stehenden integrierten Reglern wird eine sehr stabile Ausgangsspannung erreicht.

Durch den Einsatz eines Primär-Schaltreglers wird die Netzspannung gleichgerichtet, mit einer Schaltfrequenz von ca. 50 kHz getaktet und anschliessend über einen der Schaltfrequenz entsprechenden, kleinen HF-Transformer auf die notwendige Sekundärspannung herabtransformiert. Auf der vom Netz galvanisch getrennten Sekundärseite erfolgt die übliche Gleichrichtung und Siebung durch eine L/C-Kombination. Die Regelung geschieht durch Pulsbreitenmodulation, d.h. Veränderungen der Netzspannung und im Ausgangsstrombereich werden durch die Breite der Schaltimpulse auf der Primärseite ausgeglichen und damit eine konstante Spannung im Ausgang erzeugt.

Durch den Einsatz von Primär- und Sekundär-Schaltreglern im Frequenzbereich von einigen 10 kHz wird somit durch die angewandte erfindungsgemässe Technik und durch die relativ wirkungsvolle Siebung nur eine sehr geringe Wechselspannung auf die Ladespannung überlagert.

Durch diese geringere Wechselstromüberlagerung mit zusätzlich relativ hoher Frequenz werden die Temperaturerhöhungen während der Ladung weit geringer als bei üblichen 100 Hz-Überlagerungen. Die resultierende Wärmeentwicklung ist auch deshalb so gering, weil die durch den frequenzabhängigen kleinen Wechselstrominnenwiderstand die überlagerte Wechselspannung sehr klein wird und somit der wärmeerzeugende Wechselstrom ebenfalls sehr klein bleibt. Die geringere Batterietemperatur führt zu einem besseren Ladewirkungsgrad und somit zu einer geringeren Ladezeit, da der Anteil der zu vermeidenden Nebenreaktionen der Wasserzersetzung mit fallender Temperatur niedriger wird.

Die weitere Verringerung der Ladespannung in der zweiten Konstantspannung-Ladungsphase führt zu einer Dauerladung ohne praktischen Wasserverlust, da bei dieser Spannung und durch die niedrige Batterietemperatur die Rekombinationsrate praktisch 100% ist.

Vergleichsmessungen mit Ladeverfahren nach dem Stand der Technik und solchen nach der Erfindung zeigten eine mindestens 20% geringere Batterieerwärmung und eine Verringerung der Gasung (bei gleicher Ladekennlinie) um mindestens dem Faktor 2. Eine vergleichbare Voll-Ladung wird bei der Anwendung des erfindungsgemässen Verfahrens in mindestens 25% geringerer Ladezeit erreicht.

**Patentansprüche**

1. Verfahren zum Laden von verschlossenen Bleibatterien, dadurch gekennzeichnet, dass für die Ladung eine durch einen Gleichrichter erzeugte, temporär weitgehend konstante Gleichspannung verwendet wird.

2. Verfahren nach Anspruch 1, dadurch gekennzeichnet, dass die weitgehend konstante Gleichspannung kurzzeitig um höchstens 2%, vorzugsweise um höchstens 0,8% von ihrem temporären Mittelwert abweicht.

3. Verfahren nach Anspruch 1 oder 2, dadurch gekennzeichnet, dass die weitgehend konstante Gleichspannung dadurch realisiert wird, dass vorzugsweise durch den Einsatz eines Sekundär-Schaltreglers oder eines Primär-Schaltreglers, die auftretende Wechselstromüberlagerung des vom Gleichrichter erzeugten Ladestromes im Bereich kleiner als 0,05 mal dem 5-stündigen Entladestrom $I_5$ der zu laden-den Batterie gehalten wird.

4. Verfahren nach Anspruch 3, dadurch gekennzeichnet, dass die auftretende Wechselstromüberlagerung eine Frequenz von mindestens 10 kHz, vorzugsweise mindestens 30 kHz aufweist.

5. Verfahren nach einem der Ansprüche 1 bis 4, dadurch gekennzeichnet, dass die Bleibatterien Bleiakkumulatoren mit thixotropem Gel als Elektrolyt oder mit vliesadsorbiertem Elektrolyt sind.

6. Verfahren nach einem der Ansprüche 1 bis 5, dadurch gekennzeichnet, dass die Ladung mit einer dreistufigen $IU_1U_2$-Ladekennlinie in der Weise erfolgt, dass in einer ersten Stufe mit im wesentlichen konstantem Strom I bis zum Erreichen einer vorgegebenen Spannung geladen wird, darauf in einer zweiten Stufe mit einer reduzierten Spannung $U_1$ bis zu einem vorgegebenen, reduzierten Strom geladen wird, und dann in einer dritten Phase mit einer weiter reduzierten Spannung $U_2$ bis zur Beendigung der Ladung oder bis zu einer dauernden Erhaltungsladung weiter geladen wird.

7. Verfahren nach einem der Ansprüche 1 bis 6, dadurch gekennzeichnet, dass der Stromwert der I-Phase im Bereich des 0,5 bis 1,5-fachen, vorzugsweise 0,6 bis 0,8-fachen des 5-stündigen Entladestromes der zu ladenden Batterie liegt.

8. Verfahren nach einem der Ansprüche 1 bis 7, dadurch gekennzeichnet, dass die Umschaltung der I-Phase in die $U_1$-Phase dann erfolgt, wenn eine vorgegebene Spannung im Bereich von 2,3 bis 2,5 V pro Zelle bei konstantem Ladestrom der I-Phase erreicht wurde.

9. Verfahren nach einem der Ansprüche 1 bis 8, dadurch gekennzeichnet, dass die $U_1$-Phase beendet ist, wenn der Ladestrom im Bereich von 0,007 bis 0,020 mal dem 5-stündigen Entladestrom $I_5$ der zu ladenden Batterie gefallen ist, um dann in der folgenden $U_2$-Phase mit einer konstanten Ladespannung im Bereich von 2,23 bis 2,3 V pro Zelle weiter zu laden.

10. Verfahren nach einem der Ansprüche 1 bis 9, dadurch gekennzeichnet, dass die Ladung innerhalb der $U_2$-Phase beendet wird.

11. Verfahren nach einem der Ansprüche 1 bis 10, dadurch gekennzeichnet, dass die Konstantspannungen temperaturkompensiert sind im Bereich von -2 bis -7 mV/Grad, ausgehend von 30 °C Bezugstemperatur.

Fig. 1

EP 0 689 273 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | ELECTRONIC ENGINEERING, Bd.64, Nr.782, Februar 1992, LONDON GB Seite 28 ADVN KULARATNA 'Low cost battery charger using regulator' | 1,6-10 | H02J7/10 |
| Y | * das ganze Dokument * --- | 2-5,11 | |
| X | FR-A-1 535 510 (SAFT) * Seite 1, linke Spalte, Zeile 13 - rechte Spalte, Zeile 7; Abbildung 1 * --- | 1 | |
| Y | TECHNISCHE RUNDSCHAU, Bd.72, Nr.14, 8. April 1980, BERN CH Seiten 12 - 13 F. STEFFENS, H. SCHLÜSSEL 'Ladetechnik für Traktionsbatterien' * Abbildung 5 * --- | 2 | |
| Y | US-A-5 166 595 (C.G. LEVERICH) * Spalte 1, Zeile 49 - Zeile 58 * * Spalte 3, Zeile 30 - Zeile 57; Abbildungen 1-3 * --- | 3,4 | RECHERCHIERTE SACHGEBIETE (Int.Cl.6) |
| Y | PATENT ABSTRACTS OF JAPAN vol. 14, no. 550 (E-1009) 6. Dezember 1990 & JP-A-02 236 963 (SHIN KOBE ELECTRIC MACH CO) * Zusammenfassung * --- | 5 | H02J |
| A | US-A-4 889 778 (S.S. MISRA, M. NOVESKE) * Zusammenfassung * --- | 5 | |
| A | US-A-4 908 282 (J.P. BADGER) * Zusammenfassung; Abbildungen 1,2 * --- | 5 | |

-/--

Der vorliegende Recherchenbericht wurde für alle Patentansprüche erstellt

| Recherchenort | Abschlußdatum der Recherche | Prüfer |
|---|---|---|
| DEN HAAG | 25. November 1994 | Goetz, P |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EDN ELECTRICAL DESIGN NEWS, Bd.30, Nr.4, Februar 1985, NEWTON, MASSACHUSETTS US Seiten 243 - 244 F. HOFFART 'Charger extends lead-acid-battery life' * Seite 244, Absatz 3 * --- | 11 | |
| A | US-A-4 260 943 (A. ZADEREJ, G. ZADEREJ) * Spalte 1, Zeile 21 - Zeile 30 * * Spalte 2, Zeile 45 - Zeile 49; Abbildung 1 * ----- | 3,4 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 25. November 1994 | Goetz, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................
& : Mitglied der gleichen Patentfamilie, übereinstimmendes Dokument

EPO FORM 1503 03.82 (P04C03)